# EUROPEAN PATENT APPLICATION

(11) **EP 4 852 617 A1**
(43) Date of publication of application: **09.12.2026**
(21) Application number: 25180962.0
(22) Date of filing: 05.06.2025
(51) Int. Cl.: H05B 45/10, H05B 45/375

(54) **MATRIX BEAM LIGHTING MODULE**

(71) Applicant: Valeo Vision, 93012 Bobigny Cedex (FR)
(72) Inventor: KRICK, Sebastian, 93012 Bobigny (FR); VAL, Alexandre, 93012 Bobigny (FR); EL-IDRISSI, Hafid, 93012 Bobigny (FR)
(74) Representative: Valeo Visibility

(57) **Abstract**

The present invention concerns a matrix beam lighting module featuring an inverting buck converter providing an optimized for LED voltage and reducing energy losses. Developments include dynamic lighting control, current regulation, and the use of MOSFETs, LED segments, and electronic switches. The module supports dynamic adjustment of beam intensity and direction, enhancing thermal efficiency and component lifespan. It integrates an intelligent lighting system with a proprietary protocol for automotive communication, utilizing an integrated digital controller and external control signals for current modulation. Key components include, in addition to the inverting buck converter and voltage conversion stages, the LED array, sub-module LMM, all aimed at improving performance under varying driving conditions..

## Description

The present invention relates to the field of lighting and/or signaling devices for motor vehicles, in particular automobiles, and more particularly to the management of energy consumption by these devices.

Matrix beam technology is an advanced headlight system that dynamically adjusts light distribution to improve road safety and visibility while minimizing glare for other drivers. These systems use an array of individually controllable light-emitting diodes (LEDs) to selectively illuminate different areas of the road, ensuring optimal lighting conditions. Modern matrix beams are widely integrated into automotive lighting solutions, particularly in high-end vehicles, as they enhance night-time driving safety.

Conventional matrix beam systems typically consist of a light source array, an LED driver circuit, and a control unit. The control system processes input from cameras, sensors, and navigation data to selectively dim or activate specific LED segments, thus shaping the light beam according to road conditions. These systems often rely on pulse-width modulation (PWM) or current regulation to manage brightness levels efficiently.

A recurring issue in the field of lighting devices concerns energy consumption, and the technologies of these devices are evolving to reduce their energy use and extend their lifespan. Beyond solutions focused on the devices themselves, there remains a challenge in managing vehicle lighting to limit energy consumption. Regulations in different countries impose various requirements for vehicle lighting, such as size, positioning, range, width, etc. Thus, saving energy in vehicle lighting while complying with regulations remains a challenge in this field. One goal of the present invention is to address the problem of inefficient energy usage and limited adaptability in automotive lighting systems.

Another known issue in the field is the reduction of size and cost. When trying to benefit from the SiP ("system in Package") of LEDs. Generally, an independent Matrix module (with its driver) will require 2 or more DC/DC stages, which puts burden on size and cost of the device or system. While reducing the size of electronic components and integrating them into a System-in-Package (SiP) could offer several benefits like for instance a compact design, shorter signal paths, better thermal management), an independent matrix module, with its driver, will need two DC/DC converter stages as in the SOTA architecture which implies a big size and an expensive cost. Another goal of the present invention is to reduce the size and cost of the lighting module and system, in particular with optimized energy management.

The present application provides solutions for optimizing the power supply to LED arrays in matrix beam lighting modules, enabling precise control over individual LED segments while minimizing energy losses and thermal management issues. The integration of advanced current regulation techniques and a digital control interface allows for dynamic adjustments based on driving conditions, enhancing the overall performance and lifespan of the lighting system in adaptive automotive headlamps.

Some embodiments of the invention are associated with various advantages and/or technical effects, as detailed in the present application.

According to preferred embodiments of the present invention, a matrix beam lighting module comprises a voltage conversion stage including an inverting buck converter with current regulation, configured to receive an input voltage and provide a negative voltage, a control interface for dynamic lighting control, and at least one LED matrix management sub-module (LMM) comprising a plurality of electronic switches (MOSFETs) configured to independently activate or deactivate LED segments, the sub-module LMM further comprising a plurality of LEDs respectively connected to said switches and powered by said negative voltage.

The inverting buck converter is configured to provide an optimized voltage for the LEDs, thereby reducing energy losses. The utilization of an inverting buck converter tailored to provide an optimized voltage for the LEDs ensures efficient power management, leading to a reduction in overall power consumption of the lighting system. By minimizing energy losses through voltage optimization, the system enhances the vehicle's energy efficiency, contributing to extended battery life and reduced environmental impact.

In some embodiments, the inverting buck converter comprises an inductor in its output path providing current with minimized current overshoots and/or undershoots and provides an optimized voltage for the LED. The module comprises LED current regulation being optimized to minimize heating and increase component lifespan. Optimized LED current regulation reduces thermal stress on the components, which can significantly prolong the operational lifespan of the lighting module, leading to lower maintenance costs and improved reliability. Minimizing heating through current regulation not only extends component life but also enhances safety by reducing the risk of overheating, which could otherwise lead to system failure or damage.

The matrix beam lighting module ensures efficient power delivery to the LED array while minimizing energy losses and heat generation.

In an embodiment, the module further comprises MOSFETs being controlled by an integrated digital controller, allowing current modulation of the LEDs based on driving conditions and external control signals.

The integration of MOSFETs controlled by a digital controller enables precise current modulation, which allows for dynamic adjustment of light intensity in response to varying driving conditions, enhancing road safety.

The ability to modulate LED current through external control signals provides a customizable lighting experience, potentially improving driver comfort and visibility in diverse driving scenarios.

In an embodiment, the module further comprises a control interface being compatible with an automotive communication bus as LIN, CAN, or other proprietary protocol, for integration into an intelligent lighting system.

Compatibility with automotive communication buses such as LIN and CAN facilitates seamless integration into existing vehicle networks, allowing for sophisticated control and diagnostics of the lighting system.

The use of standard or proprietary communication protocols enables interoperability with other intelligent systems within the vehicle, promoting a cohesive and advanced automotive technology ecosystem.

Preferably, the module further comprises a circuit being integrated in a System-in-Package (SiP) to reduce size, cost, footprint and improve thermal efficiency.

The integration of the circuit within a System-in-Package (SiP) design minimizes the module's physical footprint, allowing for more flexible installation options and freeing up space for other vehicle components or systems.

Improved thermal efficiency resulting from the SiP configuration enhances the performance stability of the lighting module, ensuring consistent light output and reducing the likelihood of performance degradation due to heat buildup.

In one embodiment, the module further comprises a system being configured for use in an adaptive automotive headlamp, allowing dynamic adjustment of beam intensity and direction.

The integration of a dynamic adjustment system in the adaptive automotive headlamp module enhances driving safety by automatically adapting the beam intensity and direction to varying road conditions, weather, and traffic scenarios.

The module's capability to adjust beam intensity and direction in real-time improves driver comfort and reduces eye strain during night driving, as the system can seamlessly transition between high and low beams as needed.

The adaptive nature of the headlamp system allows for better illumination of the road ahead, potentially reducing the risk of accidents by increasing visibility around curves and over hills, and by minimizing glare to oncoming traffic. The system's configuration for use in adaptive automotive headlamps contributes to energy efficiency by optimizing light output based on real-time driving conditions, thereby reducing unnecessary power consumption. The dynamic adjustment capabilities of the module support the development of intelligent lighting systems that can communicate with onboard sensors and external data sources to provide optimal lighting for enhanced road safety. The module's design facilitates the integration with advanced driver-assistance systems (ADAS), enabling synergistic functionalities such as automatic headlamp leveling and synchronization with navigation data for predictive lighting adjustments.

Some embodiments concern a lighting System-in-Package (SiP) configured for use in an adaptive automotive headlamp, characterized in that it comprises at least one matrix beam lighting module according to at least one of the embodiments described herein.

Some embodiments also concern an adaptive automotive headlamp, characterized in that it comprises at least one matrix beam lighting module according to at least one of the embodiments described herein.

Some embodiments also concern a matrix beam lighting system for adaptive automotive lighting, characterized in that it comprises at least one matrix beam lighting module and/or lighting System-in-Package and/or adaptive automotive headlamp according to at least one of the embodiments described herein and at least one control unit communicating with said control interface (5) for synchronizing said LEDs and dynamically adjusting their beam intensity and direction.

The present disclosure is illustrated by way of example and not limited in the accompanying figures in which like reference numerals indicate similar elements. Embodiments of the application will now be described with reference to the attached drawing in which :

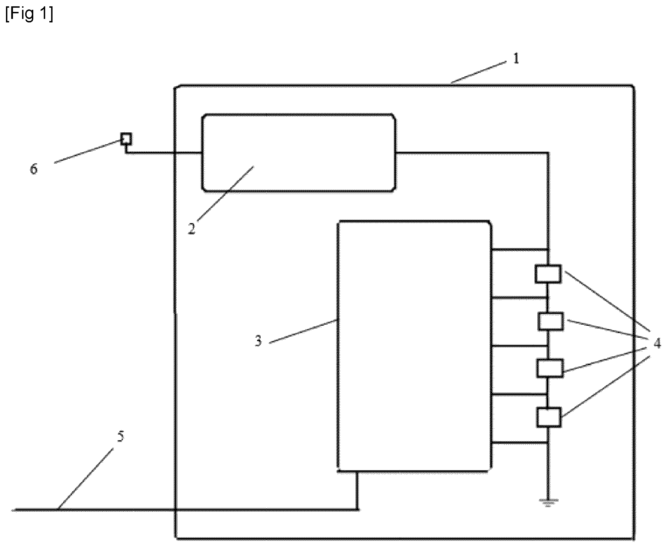

[Fig 1] Figure 1 shows an electronic part of a Matrix LED Module with Driver.

As shown in figure 1, the matrix LED module with Driver 1 is responsible for managing power supply and regulating the current for the LEDs.

A main power input voltage 6 which can come from a battery will allow buck converters to provide regulated power to different LED chains. In preferred embodiments, the Buck regulators inverts this voltage and control the current for each LED group, allowing for precise control.

The matrix LED module 1 contains a buck converter 2, a LED Matrix Manager 3, which individually controls multiple LEDs 4, and a control interface 5. The buck converter 2 is an inverting buck converter (2) with current regulation that is configured to receive an input voltage and provide a negative voltage for powering the LED array 4. The inverting buck converter (2) comprises an inductor in its output path to provide current with minimized current overshoots and/or undershoots and provides an optimized voltage for the LEDs 4 to minimize heating and increase component lifespan The LED Matrix Manager (LMM) 3 manages the activation and intensity of the LEDs by controlling multiple MOSFET switches(present within LMM 3, not shown in figure). The LEDs 4 are thus driven by MOSFETs, which act as switches to turn the LEDs on or off individually. The Led matrix manager 3 enables fine control of each LED by modulating the current or PWM and improves energy efficiency and provides flexibility for adaptive lighting. The inverting buck converter 2 along with the inductor performs the function of a nearly perfect current source due to the inductor in the output path. This configuration handles nearly perfectly the drastic load changes when switching the plurality of LEDs 4 without current overshoots and undershoots.

In some embodiments, such matrix beam lighting module is integrated into a lighting System-in-Package (SiP) configured for use in an adaptive automotive headlamp. Some embodiments thus also concern an adaptive automotive headlamp, comprising at least one of such matrix beam lighting module or such a lighting SiP. In this example, the module further comprises a circuit being integrated in a System-in-Package (SiP) to reduce footprint and improve thermal efficiency. Some embodiments therefore also concern a lighting System-in-Package (SiP) configured for use in an adaptive automotive headlamp. Such SiP preferably comprises at least one matrix beam lighting module according to the present invention.

The integration of a dynamic adjustment system in the adaptive automotive headlamp module enhances driving safety by automatically adapting the beam intensity and direction to varying road conditions, weather, and traffic scenarios.

The module's capability to adjust beam intensity and direction in real-time improves driver comfort and reduces eye strain during night driving, as the system can seamlessly transition between high and low beams as needed.

The circuit includes at least one control interface 5, also called communication and synchronization interface 5. Preferably, each module comprises an interface and the system comprises as many interfaces as there are modules. These interfaces allow communication with a control unit (a microcontroller or a central system) that controls LED activation and intensity. Some embodiments thus concern a matrix beam lighting system for adaptive automotive lighting, comprises at least one matrix beam lighting module and/or lighting System-in-Package and/or adaptive automotive headlamp according to at least one of the embodiments described herein and at least one control unit communicating with said control interface (5) for synchronizing said LEDs and dynamically adjusting their beam intensity and direction.

In this example, the module further comprises a control interface being compatible with an automotive communication bus as LIN, CAN, or other proprietary protocol, for integration into an intelligent lighting system. Compatibility with automotive communication buses such as LIN and CAN facilitates seamless integration into existing vehicle networks, allowing for sophisticated control and diagnostics of the lighting system. The use of standard or proprietary communication protocols enables interoperability with other intelligent systems within the vehicle, promoting a cohesive and advanced automotive technology ecosystem.The utilization of an inverting buck converter tailored to provide an optimized voltage for the LEDs ensures efficient power management, leading to a reduction in overall power consumption of the lighting system.By minimizing energy losses through voltage optimization, the invention enhances the vehicle's energy efficiency, contributing to extended battery life and reduced environmental impact. The matrix beam lighting module provides the advantage of conduction, ensuring efficient power delivery to the LED array while minimizing energy losses and heat generation.

The matrix beam lighting module provides the advantage of modularity, allowing for easy upgrades and replacements of individual components without affecting the entire system. This transparency facilitates seamless integration with existing automotive communication protocols for improved system interoperability. This allows to reduce the size and cost. Furthermore, it provides the advantage of controllability, enabling precise adjustments to the lighting output based on varying driving conditions and external control signals. The resulting advantages are the visibility, by enhancing the illumination quality and ensuring better road visibility for drivers and pedestrians. The ability to modulate LED current through external control signals provides a customizable lighting experience, potentially improving driver comfort and visibility in diverse driving scenarios

In this example, the module further comprises MOSFETs being controlled by an integrated digital controller, allowing current modulation of the LEDs based on driving conditions and external control signals.

The integration of MOSFETs controlled by a digital controller enables precise current modulation, which allows for dynamic adjustment of light intensity in response to varying driving conditions, enhancing road safety.

In this example, the module further comprises LED current regulation being optimized to minimize heating and increase component lifespan. Optimized LED current regulation reduces thermal stress on the components, which can significantly prolong the operational lifespan of the lighting module, leading to lower maintenance costs and improved reliability.

The adaptive nature of the headlamp system allows for better illumination of the road ahead, potentially reducing the risk of accidents by increasing visibility around curves and over hills, and by minimizing glare to oncoming traffic. Some embodiments therefore also concern an adaptive automotive headlamp comprising at least one matrix beam lighting module according to the invention.

Matrix beam lighting system for adaptive automotive lighting, characterized in that it comprises at least one matrix beam lighting module and/or lighting System-in-Package and/or adaptive automotive headlamp according to any one of the preceding claims and at least one control unit communicating with said control interface (5) for synchronizing said LEDs and dynamically adjusting their beam intensity and direction.

The inclusion of an inverting buck converter with current regulation in the voltage conversion stage ensures consistent and efficient power delivery to the LED array, leading to a longer lifespan for the LEDs and reduced maintenance costs.

The control interface (5) for dynamic lighting control allows for precise and customizable light distribution patterns, which can be tailored to specific driving scenarios or driver preferences, enhancing the overall driving experience. Some embodiments therefore also concern a matrix beam lighting system for adaptive automotive lighting, characterized in that it comprises at least one matrix beam lighting module and/or lighting System-in-Package and/or adaptive automotive headlamp according to some embodiments of the present invention and at least one control unit communicating with said control interface (5) for synchronizing said LEDs and dynamically adjusting their beam intensity and direction.

The present application describes various technical characteristics and advantages with reference to the figures and/or various embodiments. Those skilled in the art will understand that the technical characteristics of a given embodiment can in fact be combined with characteristics of another embodiment unless the opposite is explicitly mentioned or it is obvious that these characteristics are incompatible or that the combination does not provide a solution to at least one of the technical problems mentioned in this application. In addition, the technical characteristics described in a given embodiment can be isolated from the other characteristics of this mode unless the opposite is explicitly mentioned.

### Detailed list of references in the figures :

- 1: lighting system
- 2: Inverting Buck Converter
- 3: LED Matrix Management Module (LMM)
- 4: Plurality of LEDs
- 5: Control Interface
- 6: Input Voltage

## Claims

1. A matrix beam lighting module (1) comprising: a voltage conversion stage including an inverting buck converter (2) with current regulation, configured to receive an input voltage and provide a negative voltage, a control interface (5) for dynamic lighting control, at least one LED matrix management sub-module, LMM (3) comprising a plurality of electronic switches, as MOSFETs, configured to independently activate or deactivate LED segments, the sub-module LMM further comprising a plurality of LEDs (4) respectively connected to said switches and powered by said negative voltage.

2. The matrix beam lighting module according to claim 1, wherein the inverting buck converter (2) comprises an inductor in its output path providing current with minimized current overshoots and/or undershoots and provides an optimized voltage for the LEDs to minimize heating and increase component lifespan .

3. The matrix beam lighting module according to any of the preceding claims, wherein the MOSFETs are controlled by an integrated digital controller, allowing current modulation of the LEDs (4) based on driving conditions and external control signals.

4. The matrix beam lighting module according to any of the preceding claims, wherein the control interface (5) is compatible with an automotive communication bus as LIN, CAN, or other proprietary protocol, for integration into an intelligent lighting system.

5. The matrix beam lighting module according to claim 4, wherein said communication comprises a synchronization between LEDs (4) from said control interface.

6. The matrix beam lighting module according to any of the preceding claims, wherein the circuit is integrated in a System-in-Package (SiP) to reduce footprint and improve thermal efficiency.

7. A lighting System-in-Package (SiP) configured for use in an adaptive automotive headlamp, **characterized in that** it comprises at least one matrix beam lighting module according to any of the preceding claims

8. Adaptive automotive headlamp, **characterized in that** it comprises at least one matrix beam lighting module according to any of claims 1 to 8.

9. Matrix beam lighting system for adaptive automotive lighting, **characterized in that** it comprises at least one matrix beam lighting module and/or lighting System-in-Package and/or adaptive automotive headlamp according to any one of the preceding claims and at least one control unit communicating with said control interface (5) for synchronizing said LEDs and dynamically adjusting their beam intensity and direction.
